Europäisches Patentamt

European Patent Office

Office européen des brevets

(11) Publication number: **0 397 067**
**A1**

## (12) EUROPEAN PATENT APPLICATION

(21) Application number: **90108505.0**

(51) Int. Cl.⁵: **B60C 27/04**

(22) Date of filing: **07.05.90**

(30) Priority: **11.05.89 JP 117689/89**
**05.10.89 JP 261080/89**
**02.03.90 JP 51353/89**

(43) Date of publication of application:
**14.11.90 Bulletin 90/46**

(84) Designated Contracting States:
**CH DE FR LI**

(71) Applicant: **Bridgestone Corporation**
**10-1, Kyobashi 1-Chome Chuo-Ku**
**Tokyo 104(JP)**

(72) Inventor: **Nakayawa, Takeshi**
**8-33, Murota 2-chome**
**Chigasaki-shi, Kanagawa(JP)**
Inventor: **Kamiyama, Hidekatsu**
**150-7, Kashio-cho, Totsuka-ku**
**Yokohama-shi, Kanagawa(JP)**

(74) Representative: **Dreiss, Hosenthien &**
**Fuhlendorf**
**Gerokstrasse 6**
**D-7000 Stuttgart 1(DE)**

(54) **Tire slippage preventing apparatus.**

(57) A tire slippage preventing apparatus (10) comprising a first member (16) mounted to a wheel disk (70) of a wheel (68), a second member (12) attached to the first member (16), and an arm body (14) supported in position between the first member (16) and the second member (12), with the arm body (14) having an arm (58) a tip of which is fitted to a circumferential surface of a tire (69). The tire slippage apparatus (10) also has a groove provided on one of the first member (16) and the second member (12), a protrusion (76) provided on the other of the first member (16) and the second member (12), which is put in the groove by the second member being turned around an axis of the wheel (68) to mount the second member (12) to the first member (16), and a preventive means for preventing the protrusion put in the groove from disengaging from the groove.

FIG. 1

## BACKGROUND OF THE INVENTION

### Field of the Invention

The present invention relates to a tire slippage preventing apparatus which is to be used on a tire of a vehicle while running on slipping surfaces, such as a snow-covered road and the like.

### Description of the Related Art

It has been proposed that a tire slippage preventing apparatus be used which can be easily attached to and removed from a tire as disclosed in Japanese Patent Application Laid Open Nos. 57-172805 and 60-56609.

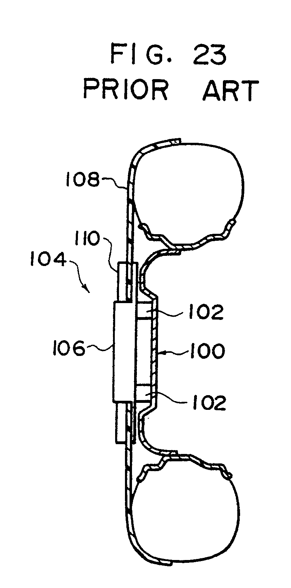

In general, a tire slippage preventing apparatus of the type mentioned above is constructed in the way that is shown in Fig. 23. A specific nut 102 is fitted, in advance, to a wheel disk 100 which rotates together with a tire. A base plate 106 which is one of the component members of a tire slippage preventing apparatus 104 is fixed in advance to the specific nut 102 by a bolt. For mounting the slippage preventing apparatus, an arm 108 is disposed on the base plate 106 and a locking member 110 is attached to the base plate 106 so that the arm 108 does not disengage from the base plate 106.

However, in the tire slippage preventing apparatus disclosed in Japanese Patent Application Laid Open No. 57-172805, the base plate and the locking member are not firmly connected together, because the connection of the base plate to the wheel disk of a wheel is carried out by engaging a pin projected from the base plate in a recess of the locking member.

And, in the tire slippage preventing apparatus disclosed in Japanese Patent Application Laid Open No. 60-56609, there is the disadvantage that the operation of removing the locking member from the base plate is complicated and therefore it is difficult to remove the locking member without a special tool.

## SUMMARY OF THE INVENTION

Accordingly, an object of the present invention is to provide a tire slippage preventing apparatus which is securely attached to a tire and does not need any special tools for the removal of the tire slippage preventing apparatus from the tire.

The tire slippage preventing apparatus of the present invention comprises a first member which is fixed to a wheel disk of a wheel in advance, a second member which is mounted on the first member, and an arm body which is supported between the first member and the second member and which has arms, the tip portions of which contacts the circumferential surface of the tire. And, the present invention has engaging means comprised of protrusions provided on one of the first and second members and grooves provided in the other of the first and second members into which the protrusions are inserted and then turned around the axis of the wheel to connect the two members, and preventive means for preventing the protrusion inserted into the groove from disengaging from the groove.

In order to mount a tire slippage preventing apparatus on a tire according to the present invention, after the first member is secured to the wheel disk, an arm body is placed on the wheel via the wheel disk in such a way that the arms of the arm body are positioned around the circumferential surface of the tire. While the first member is in this state, a second member is pushed toward the wheel and is turned, so that the protrusions formed on one of the first and second members are inserted into the grooves formed on the other of the two members. A preventive means disposed around the entrance the groove prevents the protrusion from disengaging from the groove, ensuring that the first and second members are firmly connected.

In order to remove the tire slippage preventing apparatus from the tire, the preventing means is moved in the axial direction so as to disengage from the entrance of the groove, and then the second member is turned in the axial direction, so that the protrusion then can be disengaged of the groove, thereby allowing the arm body to be removed.

## BRIEF DESCRIPTION OF THE DRAWINGS

Figs. 1 through 3 show a first embodiment of a tire slippage preventing apparatus according to the present invention.

Fig. 1 is an exploded perspective view illustrating the tire slippage preventing apparatus;

Fig. 2 is a cross-sectional view of a locking body and a base plate taken along the line II-II in Fig. 3;

Fig. 3 is a perspective view of the locking body and the base plate;

Fig. 4 is a vertical cross-sectional view of a locking body and a base plate of a second embodiment of the tire slippage preventing apparatus according to the present invention, corresponding to Fig. 2;

Fig. 5 is a vertical cross-sectional view of a locking body and a base plate of a third embodiment of the tire slippage preventing apparatus according to the present invention, corresponding to Fig. 2;

Fig. 6 is a vertical cross-sectional view of a locking body and a base plate of a fourth embodiment of the tire slippage preventing apparatus according to the present invention, corresponding to Fig. 2;

Figs. 7 and 8 show a fifth embodiment of the tire slippage preventing apparatus according to the present invention, and

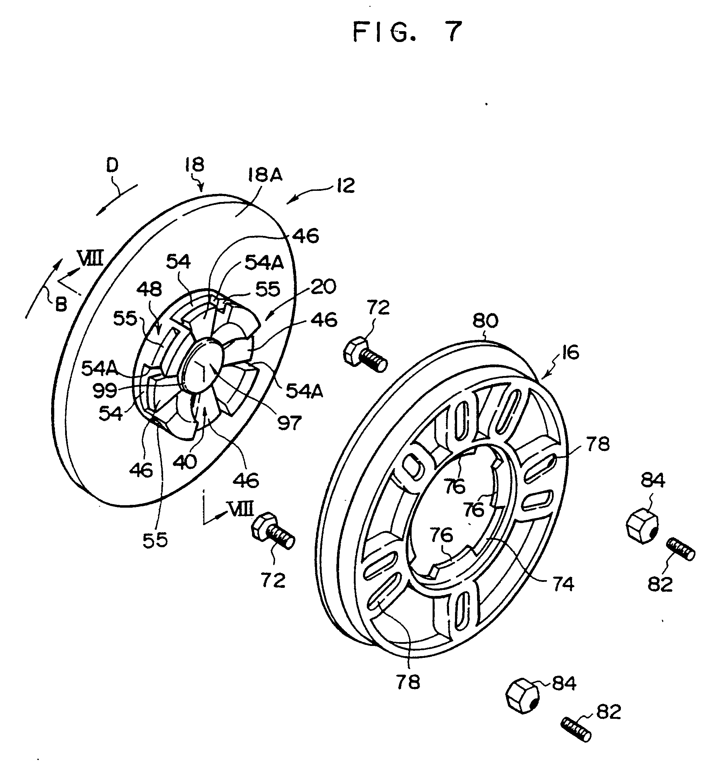

Fig. 7 is an exploded perspective view illustrating the tire slippage preventing apparatus;

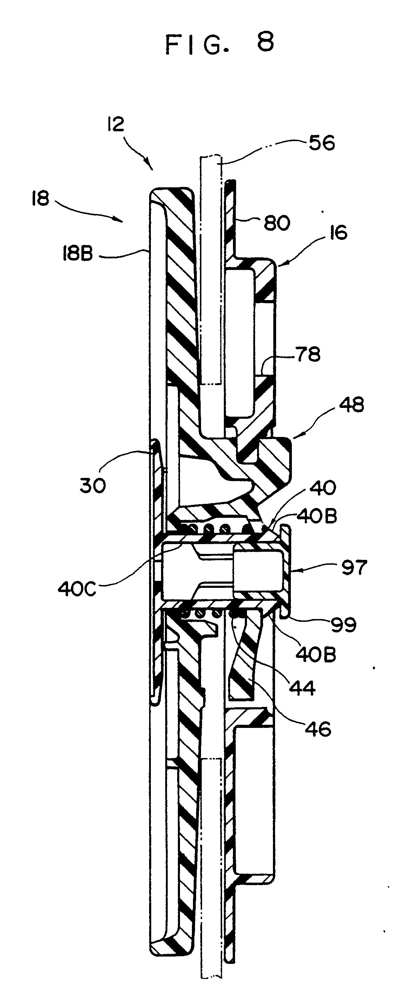

Fig. 8 is a cross-sectional view of a locking body and a base plate taken along the line VIII-VIII in Fig. 7;

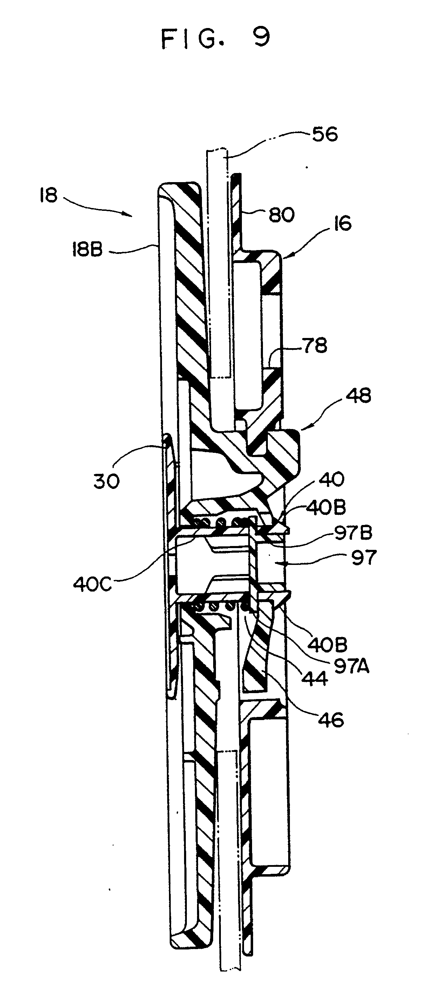

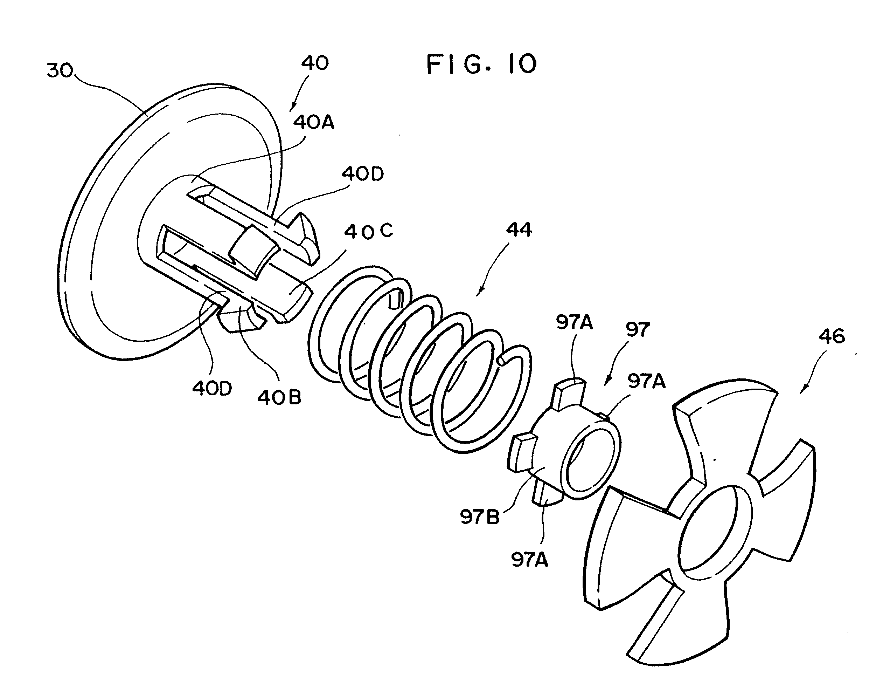

Figs. 9 and 10 show a sixth embodiment of the tire slippage preventing apparatus according to the present invention, and

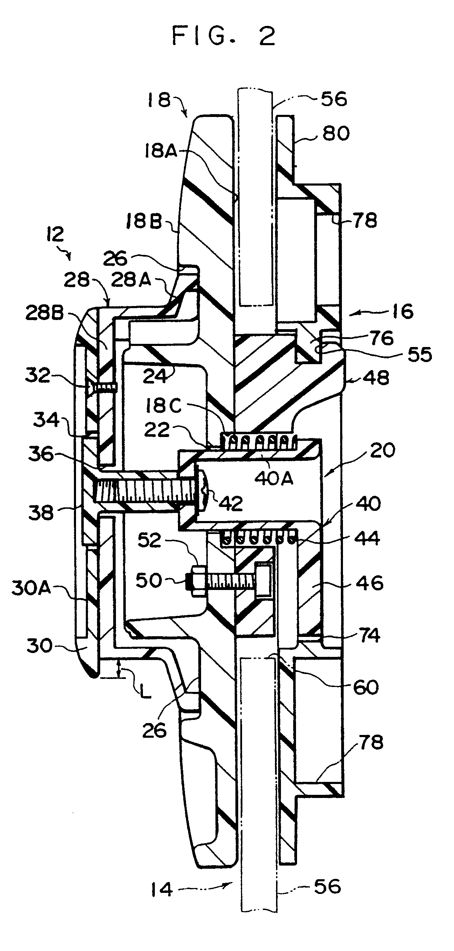

Fig. 9 is a vertical cross-sectional view of a locking body and a base plate, corresponding to Fig. 2, and

Fig. 10 is an exploded perspective view of a locking protrusion, a bush and a flange portion;

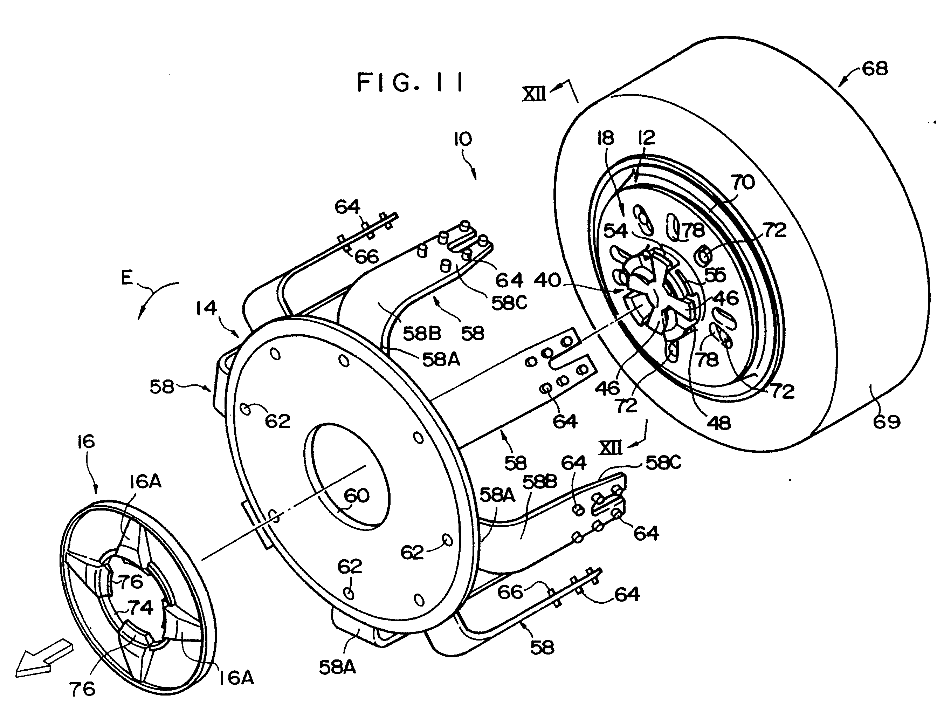

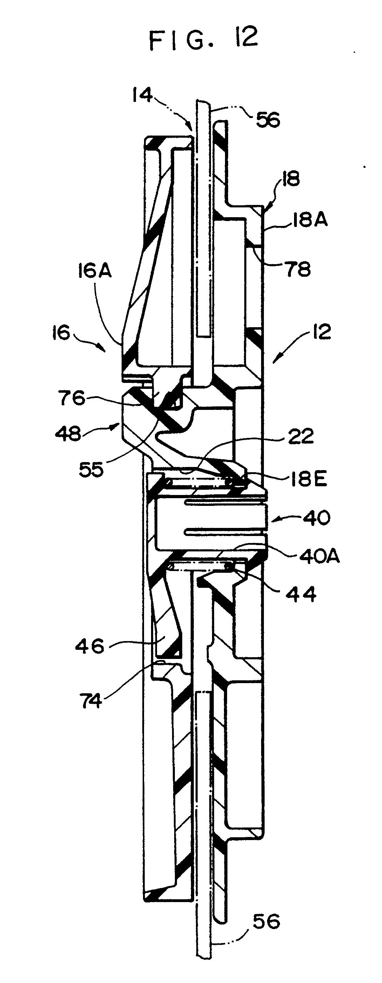

Figs. 11 and 12 show a seventh embodiment of the tire slippage preventing apparatus according to the present invention;

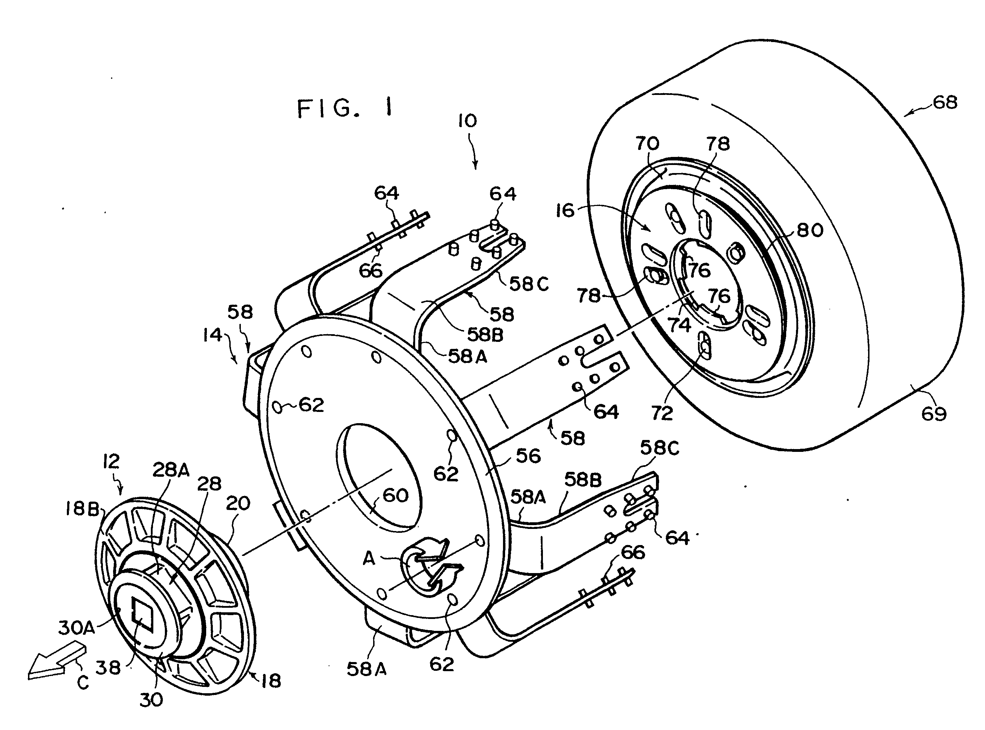

Fig. 11 is an exploded perspective view of the tire slippage preventing apparatus, corresponding to Fig. 1, and

Fig. 12 is a cross-sectional view of a locking body and a base plate taken along the line XII-XII in Fig. 11;

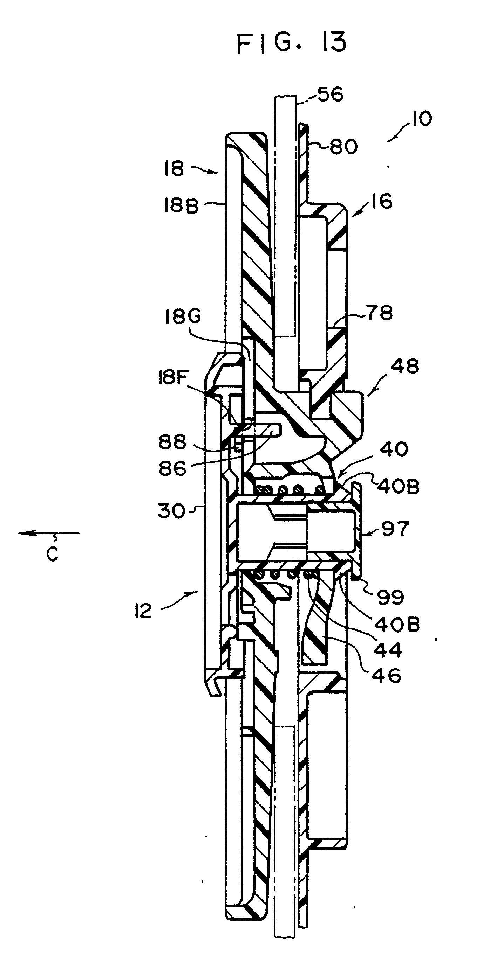

Figs. 13 through 16(A) and 16(B) show an eighth embodiment of the tire slippage preventing apparatus according to the present invention;

Fig. 13 is a vertical cross-sectional view of a locking body and a base plate, corresponding to Fig. 2;

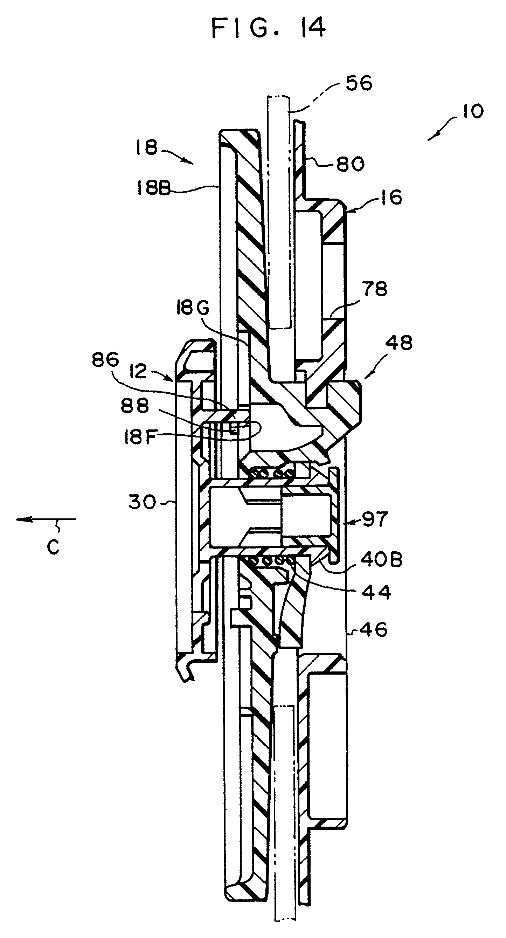

Fig. 14 is a vertical cross-sectional view of a pulled locking body and a base plate;

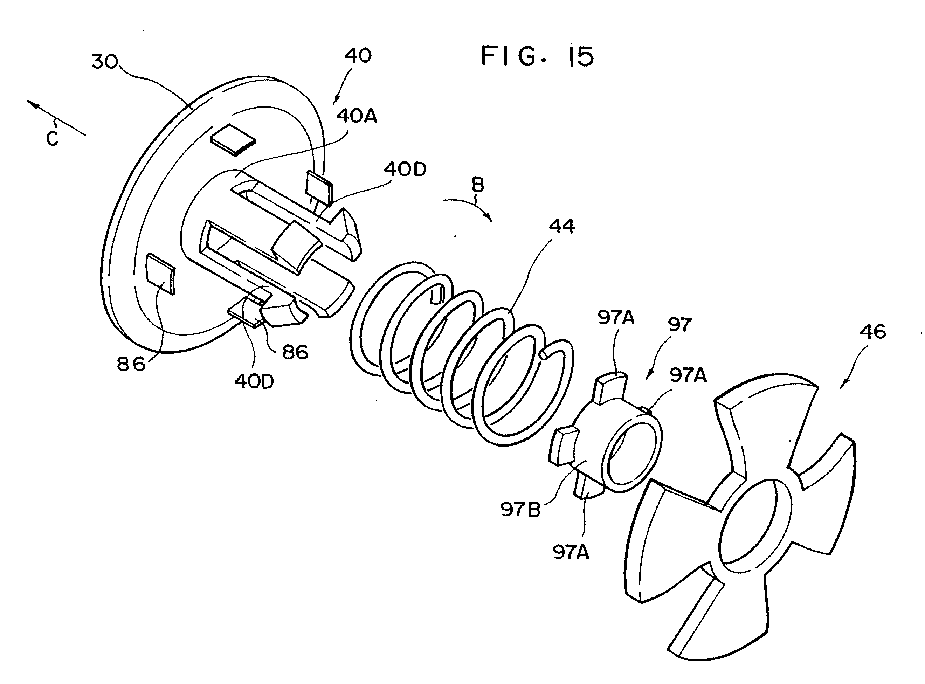

Fig. 15 is an exploded perspective view of a locking protrusion, a bush and a flange;

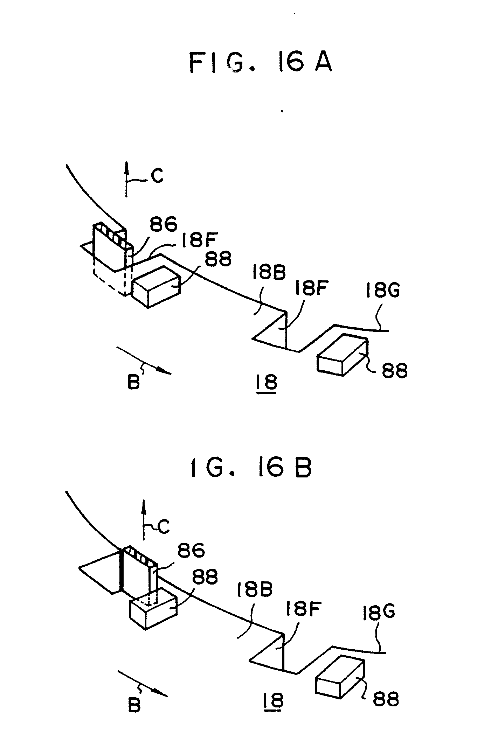

Figs. 16(A) and 16(B) are explanatory views of an engaging pawl;

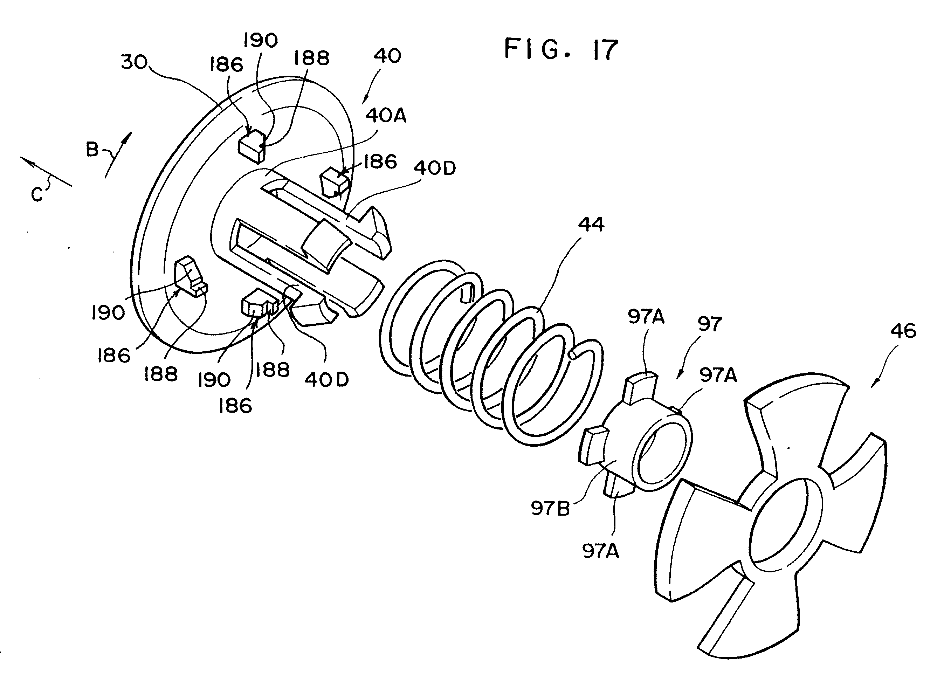

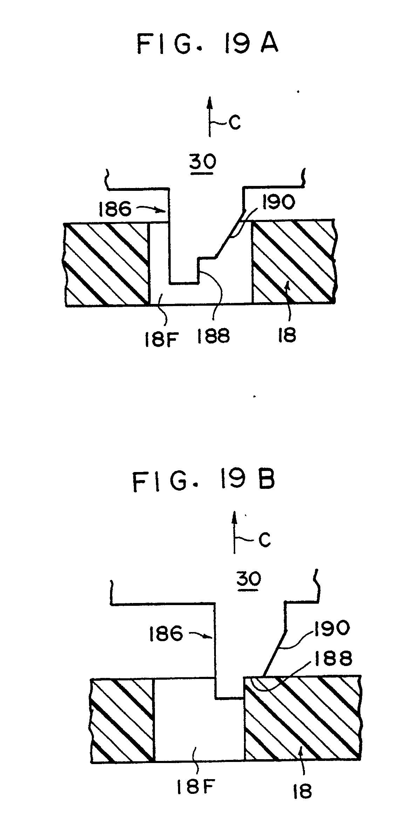

Figs. 17 through 19(A) and 19(B) show a ninth embodiment of the tire slippage preventing apparatus according to the present invention;

Fig. 17 is an exploded perspective view of a locking protrusion, a bush and a flange;

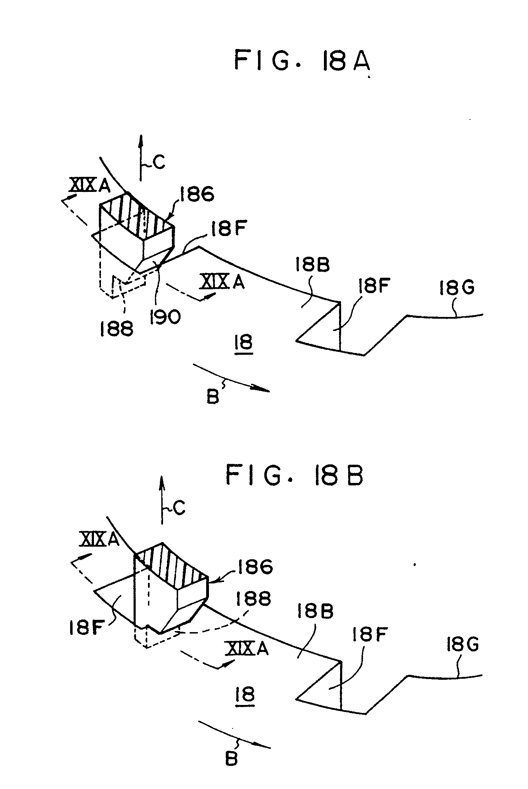

Figs. 18(A) and 18(B) are explanatory views of an engaging pawl;

Fig. 19(A) is a cross-sectional view taken along the line IXA-IXA in Fig. 18(A);

Fig. 19(B) is a cross-sectional view taken along the line XIXB-XIXB in Fig. 18(B);

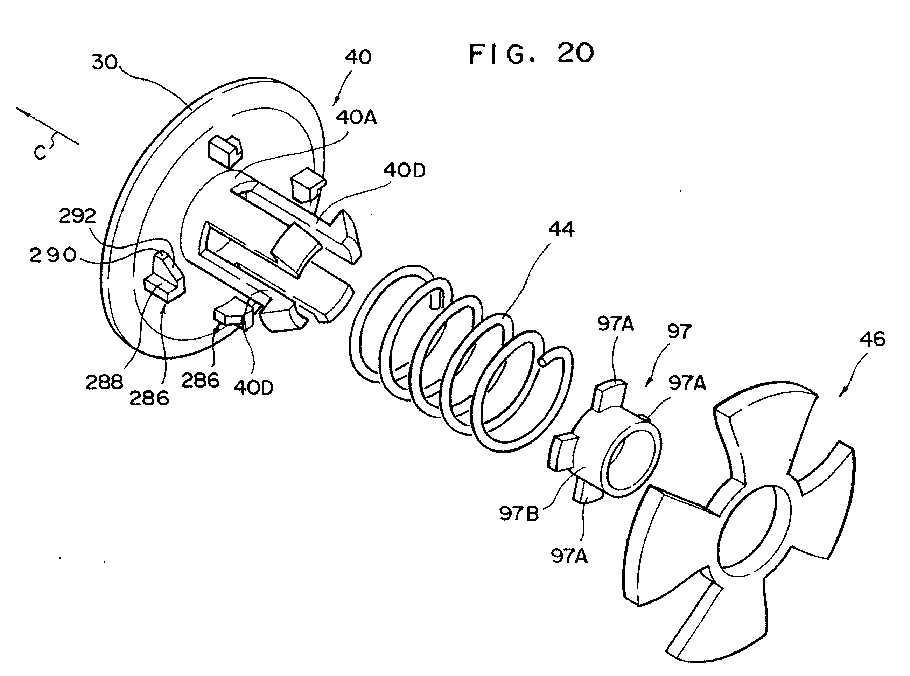

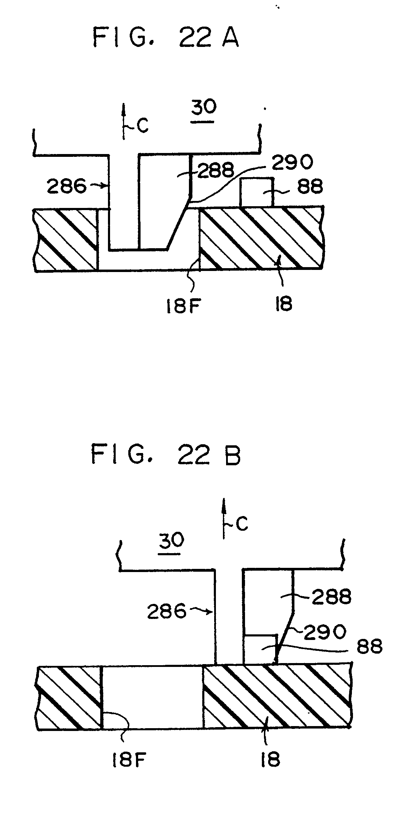

Figs. 20 through 22(A) and 22(B) show a tenth embodiment of the tire slippage preventing apparatus according to the present invention;

Fig. 20 is an exploded perspective view of a locking protrusion, a bush and a flange;

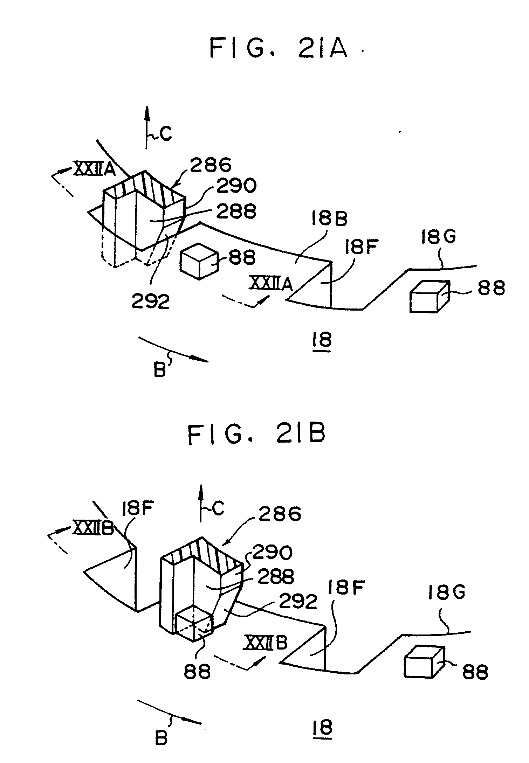

Figs. 21(A) and 21(B) are explanatory views of an engaging pawl;

Fig. 22(A) is a cross-sectional view taken along the line XXIIA-XXIIA In Fig. 21(A);

Fig. 22(B) is a cross-sectional view taken along the line XXIIB-XXIIB in Fig. 21(B); and

Fig. 23 is a schematic cross-sectional view of a conventional tire slippage preventing apparatus.

DESCRIPTION OF THE PREFERRED EMBODIMENTS

First Embodiment:

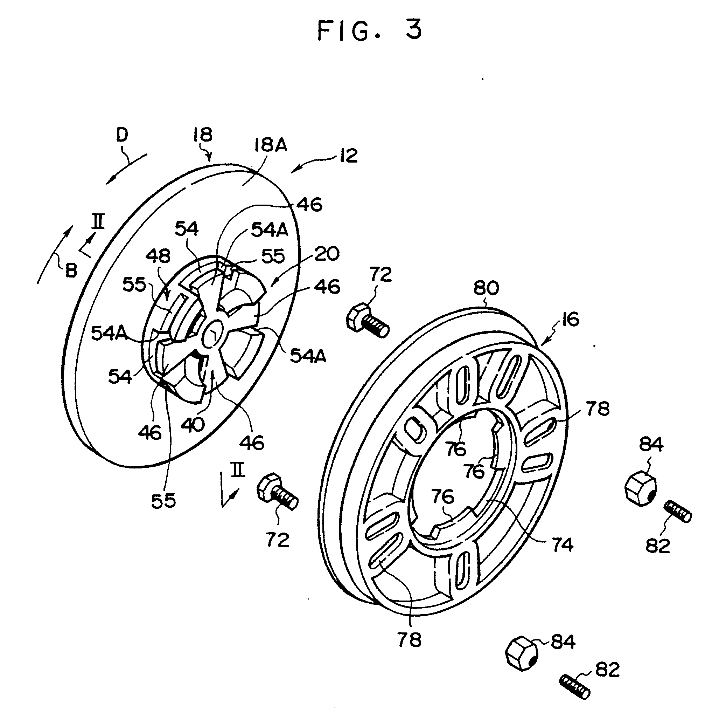

Figs. 1 and 3 show a tire slippage preventing apparatus 10 of a first embodiment according to the present invention.

As shown in Fig. 1, the tire slippage preventing apparatus 10 has a base plate 16 as a first member which is mounted to a wheel disk 70 of a wheel 68 in advance, a locking body 12 as a second member which is attached to the base plate 16, and an arm body 14 which is securely supported between the base plate 16 and the locking body 12. These members can be specifically formed from thermoplastic materials, such as thermoplastic elastomers, polyethylene, or thermoplastic polyurethane or the like, and thermosetting plastics, such as FRP (fiber-reinforced plastic) or thermosetting polyurethane.

The locking body 12 is comprised of a disk portion 18 and a locking portion 20.

As shown in Fig. 2, the disk portion 18 has a through hole 22 formed in the axial direction thereof at the center portion thereof. The disk portion 18 also has a planar surface 18A formed on the wheel side thereof, shown at the right-hand side in Fig. 2. A convex surface is formed on the other side 18B of the disk portion 18 (left-hand side in Fig. 2) opposite to the wheel so that its surface is increasingly distant from the surface of the planar side surface 18A as the center is approached.

Also, the disk portion 18 has a recess 24 at the planar side surface formed coaxially with the through hole 22 at the center, and has a ring-shaped circular groove 26 formed coaxially with the outside of the recess 24.

The circular groove 26 has a leg 28A of a substantially rectangular tubular portion 28 (substantially square in this embodiment) arranged thereon. The tip end of the leg 28A contacts the bottom of the circular groove 26. The tubular portion 28 has a top plate 28B formed on the side opposite to the wheel. A disk-shaped holding portion 30 which has a diameter approximately equal to the distance between opposite angles of the top plate 28B is fixed to the top plate 28B by a screw 32. The holding portion 30, as shown in Fig. 2, protrudes outward from the top plate 28B of the tubular portion 28 at a point approximately midway between adjacent angle of the tubular portion 2 in a radial direction thereof by a length L. Thus, the holding portion 30 can be held easily. The holding portion 30 has a recess 30A formed on the side opposite to the wheel. The recess 30A can contain decorative members, a manufacturer's name plate, or the like (not shown). It also can conceal the head of the screw 32 and the like to improve its design.

The holding portion 30 and the top plate 28B of the tubular portion 28 have each of through holes 34 and 36 respectively formed at the centers thereof. The diameter of the through hole 34 is larger than the diameter of the through hole 36.

The locking portion 20 is inserted into the through holes 22, 34 and 36. The locking portion 20 is comprised of a substantially T-shaped engaging piece 38 inserted in the through hole 36 and a locking protrusion 40 coaxially arranged with it. A widened portion on one end of the engaging piece 38 contacts the top plate 28B of the tubular portion 28 to stop movement in a direction toward the disk portion 18. The other end of the engaging piece 38 is fixed to the locking protrusion 40 by a long screw 42. A coil spring 44 is disposed on an outer peripheral surface of a cylindrical portion 40A of the locking protrusion 40. One end of the compression coil spring 44 is fitted to a recess 18C formed in the planar surface 18A of the disk portion 18, and the other end of the compression coil spring 44 is fitted to a flange member 46 extended on the wheel-side of the locking protrusion 40 at right angles to the axis thereof, accordingly, urging the locking protrusion 40 toward the wheel, i.e. in the direction to the right in Fig. 2.

As shown in Fig. 3, the flange member 46 has four ends which extend out in a radial formation like a fan.

As shown in Figs. 2 and 3, the disk portion 18 has an approximately cylindrical protrusion 48 fixed on the surface of one end 18A by a bolt 50 and a nut 52. The protrusion 48 which is shown in Fig. 2, is inserted in a through hole 60 formed on a support ring 56 of the arm body 14.

The protrusion 48, as shown in Fig. 3, has a cavity into which the locking protrusion 40 can be inserted, and has four depressions 54 in a radial formation corresponding to the flange member 46, which can be contained therein. Each of the depressions 54 has one end wall 54A which forms an engaging groove 55 in a circular direction to contain the flange member 46.

As shown in Fig. 1, the arm body 14 comprises eight arms 58 that extend radially from disk-like support ring 56.

The support ring 56 is formed with a larger outside diameter than the disk portion 18. The through hole 60 formed on a central portion of the support ring 56 through which the protrusion 48 is inserted is far larger in diameter than the protrusion 48 fixed to the disk portion 18.

Therefore, even when the protrusion 48 is inserted into the through hole 60, the support ring 56 can be moved to a certain extent radially, or in the vertical direction in Fig. 2. This means that a tire 69 can be easily mounted on the arm body 14. A base portion 58A of the arm 58, as shown in Fig. 1, is attached to the support ring 56 by a rivet 62 so that the arm 58 can be turned to a certain degree around the rivet 62 in a circumferential direction of the tire 69, that is, in the direction of the arrow direction in Fig. 1. An intermediate portion 58B of the arm 58 is bent toward the wheel so that a tip end portion 58C can be at an outside peripheral surface of the tire 69. The tip end portion 58C of the arm 58 has a plurality of spike pins 64 on a side thereof contacting a road. It also has a plurality of projections 66 on a side thereof contacting the tire.

The wheel disk 70 of the wheel 68, as shown in Fig. 1, has the base plate 16 attached thereto by a bolt 72. The bolt 72, as shown in Fig. 3, is screwed by a nut 84 fixed to a bolt 82 protruded from a wheel body. The base plate 16 is formed like a plate of 10 to 13 mm thickness. It can be made to be 5 to 6 mm thick if it is formed of steel.

The base plate 16 has a through hole 74 radially formed on a central portion thereof. The through hole 74 has on a inside surface thereof four engaging pieces 76, formed to protrude radially inward, which are put into the engaging grooves 55.

Also, the base plate 16 has a plurality of elliptic through holes 78 for the bolt, a radial direction of which is lengthwise. In this embodiment, the through holes 78 of the base plate 16 have pitch compatible distances (PCD) of 100mm, 114.3mm, and 120mm each. Thus, the base plate 16 can be mounted to a disk wheel different in bolt pitch, number of bolt holes, etc. There is formed a circular flange 80 on a side of the base plate 16 opposite to the wheel. The flange 80 has an outside diameter approximately the same as that of the disk portion 18. The support ring 56 is positioned between the flange 80 and the disk portion 18.

The following paragraphs describe mounting procedures and operation of the tire slippage preventing apparatus 10 in this embodiment.

In order to mount on the wheel disk 70 the base plate 16 which is one of the component members of the tire slippage preventing apparatus 10 of the present invention, as shown in Fig. 1, the flange 80 is placed in a direction opposite to the wheel, or in the direction of arrow C in Fig. 1. The bolt is inserted into the through hole 78 of the base plate 16. The bolt 72 is tightened by the nut 84 to secure the base plate 16 to the wheel disk 70.

Then the worker should hold the arm body 14 so that the through hole of the support ring 56 can fit with the through hole 74 of the base plate 16. The worker should press the arm body 14 to the base plate 16 and at the same time, should fit the tip end portion of each arm 58 to the side of the tire contacting the road. In this case, the arm 58 to be inserted between the tire 69 and the road cannot be placed on the side of the tire 69 contacting the road. The arm 58 can be turned to a certain degree, however, since the arm 58 can be turned around the rivet 62 to the degree in the circumferential direction of the tire. Holding the locking body 12, then, the locking body 12 is to be coupled with the base plate 16. As the through hole 60 formed on the support ring 56 has a large diameter, the worker can see well the engaging pieces 76 of the base plate 16 from the outside of the support ring 56.

Thus, the worker can easily make the engaging pieces 76 of the base plate 16 correspond to the depressions 54 formed on the protrusion 48 of the locking body 12. The worker then, should place the flange member 46 of the locking protrusion 40 so as to correspond to the engaging pieces 76 of the base plate 16. The locking body 12 should be pressed toward the wheel to press the flange member 46 to the engaging pieces 76. This can move the flange member 46 in the direction opposite to the wheel against the urging force of the compression coil spring 44. When the engaging pieces 76 are advanced to a position corresponding to the engaging grooves 55, the locking body 12 should be turned in the direction of arrow D in Fig. 3 to insert the engaging pieces 76 into the engaging grooves 55 formed on the protrusion 48. In this state, the flange member 46 can be returned to its initial position by the urging force of the compression coil spring 44.

Therefore, the engaging pieces 76 that were fixed not to axially turn and put in the engaging grooves 55 can be fully kept from coming out of the engaging grooves 55 by the flange member 46. This can rigidly secure the base plate 16 and locking body 12. The arm body 14, also, can be firmly secured by the base plate 16 and the locking body 12. This completes the mounting procedures for the tire slippage preventing apparatus 10.

In order to remove the tire slippage preventing apparatus 10, the following procedures should be taken. First, holding the holding portion 30 of the locking body 12, pull it in the direction opposite to the wheel, or in the direction of arrow C in Fig. 1. This makes the flange member 46 of the locking protrusion 40 move in the direction opposite to the wheel against the urging force of the compression coil spring 44. This allows the engaging pieces 76 of the base plate inserted in the engaging grooves 55 of the protrusion 48 to be released from inlets of the engaging grooves 55 for removal. In this state, the locking body 12 should be turned in the direction of arrow B in Fig. 3. As a result, the engaging pieces 76 come out of the engaging grooves 55. The holding portion 30 can be released from pulling to return the flange member 46 in the direction toward the wheel by the urging force of the compression coil spring 44. As the base plate 16 and the locking body 12 are released from engaging, the arm body 14 can be removed from the tire 69. In short, in the present invention, the tire slippage preventing apparatus 10 can be quickly and easily removed from the tire 69 without any specific tools or jigs.

Even if the locking body 12 and the arm body 14 are not mounted to the base plate, the base plate 16 can be still mounted to the wheel disk 70 without causing a problem of so-called over fender that the base plate 16 comes laterally out of the vehicle body. This is because the base plate 16 is planar shaped.

Second Embodiment:

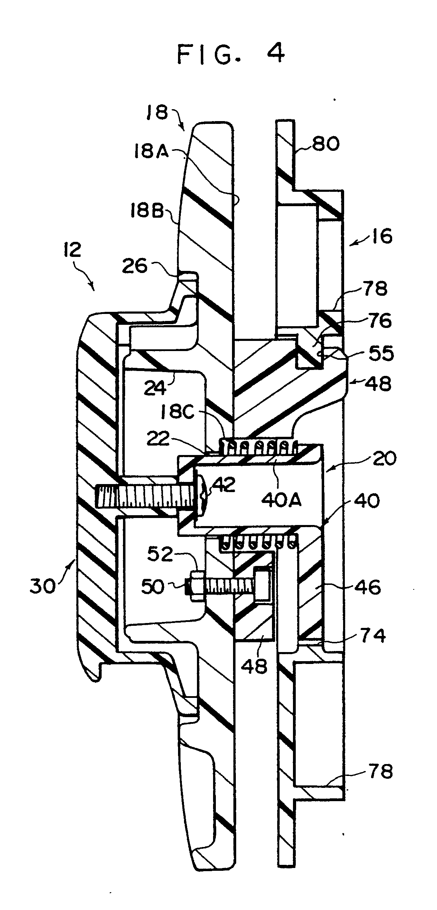

Fig. 4 shows a second embodiment of the tire slippage preventing apparatus 10 according to the present invention. In this embodiment, as shown in the figure, the tire slippage preventing apparatus 10 has the holding portion 30, the substantially rectangular tubular portion 28, and the engaging piece 38 mentioned in the preceding first embodiment integrated together thereon.

Therefore, the holding portion 30 needs the screw 32 and the through hole 34 which are required in the first embodiment. As a result the formation of the holding portion 30 and the recess 30A does not need to fit any members such as the like plate to cover the screw 32. The holding portion 30, however, can have the plate fitted thereto as decoration, or can have patterns and the like on a surface thereof.

Therefore, this second embodiment is advantageous in reducing the number of component parts as well as production costs since the holding portion 30 is integrated together with the tubular portion 28 and the engaging piece 38.

Third Embodiment:

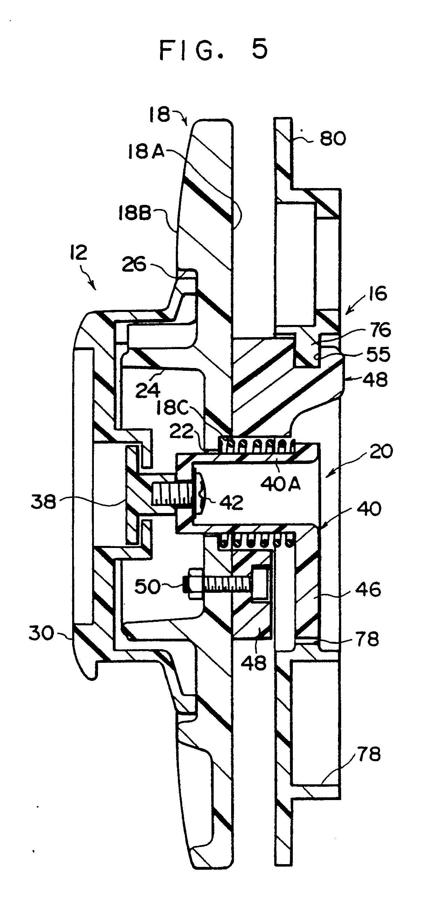

Fig. 5 shows a third embodiment of the tire slippage preventing apparatus 10 according to the present invention. In this embodiment, as shown in the figure, a holding portion 30 of the tire slippage preventing apparatus 10 has the substantially rectangular tubular portion 28 mentioned in the preceding first embodiment integrated together. Thus, the holding piece 38 is fitted to the holding portion 30.

Therefore, the tire slippage preventing apparatus 10 in this third embodiment is advantageous in that disassembling can be easily accomplished, although numbers of component parts are increased, as compared with that of the second embodiment.

Fourth Embodiment:

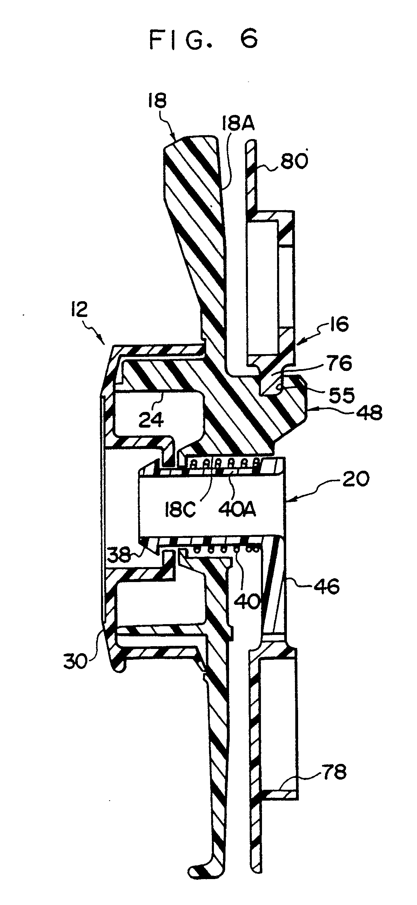

Fig. 6 shows a fourth embodiment of the tire slippage preventing apparatus 10 according to the present invention. In this embodiment, as shown in the figure, a disk portion 18 has a protrusion integrated together with a surface of one end 18A thereof. A engaging piece 38 and a flange member 46 of a locking portion 20 also are integrated together.

Therefore, the tire slippage preventing apparatus 10 in this fourth embodiment is advantageous in that numbers of component parts are reduced.

Fifth Embodiment:

Figs. 7 and 8 show a fifth embodiment of the tire slippage preventing apparatus 10 according to the present invention. In this embodiment, as shown in Fig. 8, a locking protrusion has a holding portion 30 integrated together therewith. The holding portion 30 is made shorter in length in an axial direction thereof, or in an lateral direction in Fig. 8. The locking protrusion 40 has an engaging protrusion 40B formed radially outward on a side opposite to the holding portion 30. The engaging protrusion 40B can be fitted with a circumference of a central portion of a flange member 46 provided separately. The locking protrusion 40 has a bush insertion hole 40C in an axial direction thereof, and has a bush 97 pressed therein, thereby preventing the bush insertion hole 40C from adversely shrinking.

A locking body 12 can be assembled as follows. The holding portion 30 is to be inserted into a disk portion 18. A compression coil spring 44 is to be wound around the locking protrusion 40. The clocking protrusion 40 is to be inserted into an axial hole of a flange member 46 against an urging force of the compression coil spring 44. This allows the flange member 46 to be fitted to the engaging protrusion 40B by the urging force of the compression coil spring 44. This completes the assembling of the locking body 12.

The bush 97, as shown in Fig. 7, has a engaging portion 99 formed radially outward on one axial end thereof to fit with an end of the engaging protrusion 40B. This can prevent the bush 97 from being inserted into the bush insertion hole 40C beyond that. Thus, even if pressing the bush 97 into the bush insertion hole 40C may pull the holding portion 30 as to cause it to deviate in an oblique direction from the axial direction, an outside diameter of the locking protrusion 40 will not shrink adversely. This is advantageous to definitely securely prevent such trouble as the engaging portion of the locking protrusion 40 being released from with the flange member 46.

Sixth Embodiment:

Figs. 9 and 10 show a sixth embodiment of the tire slippage preventing apparatus 10 according to the present invention. In this embodiment, also, a bush 97 is pressed as in the fifth embodiment. The bush 97 has a plurality of flanges 97A formed radially outward on one axial end thereof. The bush 97 is inserted into a bush insertion hole 40C of a locking protrusion 40 so that the flanges 97A should be positioned back in the bush insertion hole 40C. The flanges 97A, however, can protrude from an opening formed on the locking protrusion 40 (see Fig. 10).

A cylindrical portion 40A of the locking protrusion 40 has a compression coil spring 44 wound thereon. Thus, the flanges 97A of the bush can be held in position between the compression coil spring 44 and a flange member 46 and, at the same time, a cylindrical portion 97B is fitted to an inside surface of an engaging protrusion 40B. This prevents the engaging protrusion 40B from swinging toward a shrinking direction of the locking protrusion 40. This is effective to definitely prevent such trouble as the engaging protrusion 40B of the locking protrusion 40 being disengaged from the flange member 46.

Seventh Embodiment:

Figs. 11 and 12 show a seventh embodiment of the tire slippage preventing apparatus 10 according to the present invention. This embodiment differs from the first to sixth embodiments in that in the construction, as shown in Fig. 11, a locking body 12 as a first member is provided on a wheel disk 70 which is mounted on the wheel 68 in advance and, a base plate 16 as a second member is attached to the locking body 12 upon assembling.

A disk portion 18 of the locking body 12, as shown in Fig. 12, has no protrusions on a surface of one end 18A thereof. However, there are integrated a protrusion 48 toward a side opposite to the wheel, or in the direction to the left in Fig. 12, on a central portion of a surface of the other end 18B, as in the previous embodiments.

The disk portion 18 of the locking body 12, as shown in Fig. 11, has a plurality of elliptic through holes 78, arranged lengthwise in a radial formation, formed thereon, as in the base plate 16 in the first embodiment. Each of the through holes 78 has a bolt 72 inserted therein to attach the locking body 12 to the wheel disk.

A through hole 22 formed on a central portion of the protrusion 48, as shown in Fig. 12, has a locking protrusion 40 inserted therein movably in an axial direction thereof. The through hole 22 has a engaging piece 18E protruded in an axial direction thereof on the wheel side, or on the right side in Fig. 12. A cylindrical portion of the locking protrusion 40 has a compression coil spring 44 wound on an outside surface thereof. One end of the compression spring 44 is fitted to a flange member 46, and the other end is to engaging piece 18E to exerting an urging force to the locking protrusion 40 in a direction opposite to the wheel.

Therefore, when the base plate is attached to the locking body 12 wherein the engaging piece 76 of the base plate is made to correspond to a depression of the protrusion 48 to press the base plate in the wheel direction, the locking protrusion 40 can move in the wheel direction against the urging force of the compression coil spring 44. When the engaging piece 76 is put into the engaging groove 55 in such a way that the engaging piece 76 turns the base plate 16 in the direction of arrow E in Fig. 11 at a position corresponding to the engaging groove 55, the locking protrusion 40 can be returned back by the urging force of the compression coil spring 44 to block an entrance of the engaging groove 55. The engaging piece 76, therefore, can be kept from coming out of the engaging groove 55 by the flange member 46 which fits the locking body 12 with the base plate 16, as in the previous embodiments.

The base plate 16, as shown in Fig. 11, has a plurality of holding portions 16A formed in a radial direction thereof on the side opposite to the wheel, or in the direction of arrow C in Fig. 11. As the holding portions 16A are protruded in the direction opposite to the wheel, the base plate 16 can be easily turned by holding the holding portions 16A.

In order to attach the base plate 16 to the locking body 12 in this embodiment, a worker can see a positional relationship between the depression of the protrusion 48 of the locking body 12 and the engaging piece 76 of the base plate 16 through the through hole 74 formed on the central portion of the base plate 16. This means that the worker can perform the assembling quickly and easily.

In this embodiment, the locking body 12 is made far more simple than those of the first to fourth embodiment as it comprises a disk portion 18, the protrusion 48, the locking protrusion 40, and the compression coil spring 44. That is, the base plate 16 is pressed only in this embodiment, while the previously mentioned embodiments need the holding portion 30 and the like to pull the locking body 12, This embodiment can reduce the number of component parts and decrease production costs.

As the locking body 12 has no tubular portion 28 formed, the locking body 12 can be made small in the axial length thereof.

It should be noted that an arm body in this embodiment is constructed in the same way as those of the first to sixth embodiments.

Eighth Embodiment:

Figs. 13 through 16(A) and 16(B) show an eighth embodiment of the tire slippage preventing apparatus 10 according to the present invention. The tire slippage preventing apparatus 10 in this embodiment is similar to that of the fifth embodiment.

In this embodiment, a holding portion 30, as shown in Figs. 13 and 14 has an engaging pawl 86 on a surface thereof on a side of a base plate 16. There are provided a plurality of the engaging pawls 86, as shown in Fig. 15, around a circumference of a cylindrical portion 40A of the locking protrusion 40.

A disk portion 18, as shown in Fig. 13 and 16-(A), has a circular hole 18G formed in an axial direction thereof on a central portion thereof. The circular hole 18G has a plurality of cutaway grooves 18F in inward radial directions of the disk portion 18 formed on an inside surface thereof, the number of which is equal to that of the engaging holes 86. When the locking body 12 is fitted with the base plate 16, the engaging pawls 86 are put in the cutaway grooves 18F formed on the disk portion 18.

Also, the disk portion 18 has a plurality of stoppers 88 protruded in a direction toward the holding portion 30 on a surface of the other end 18B thereof in vicinity to the cutaway grooves 18F. Each of the stoppers 18 prevents the respective engaging pawls 86 from engaging with and being putting into any other cutaway groove 18F when the holding portion 30 is turned in a direction of arrow B in Fig. 16(A).

In order to release the base plate 16 from engagement with the locking body 12, as shown in Figs. 14 and 16(B), a worker should hold the holding portion 30 to pull it in a disengagement direction, or toward arrow C in Fig. 14, against an urging force of the compression coil spring 44. The engaging pawl 86 then can be taken out of the cutout groove 18F. If the holding portion 30 is turned in the direction of arrow B, then the engaging pawl 86 can fit with the stopper 88. This allows the disk portion 18 to turn in the direction of arrow B to release the base plate 16 from the locking body 12.

In order to fit the locking body 12 with the base plate 16, on the other hand, the holding portion 30 should be turned in the direction opposite to arrow B to put the engaging pawl 86 into the cutaway groove 18F.

If the holding portion 30 is pulled toward the disengagement direction and turned a little in the direction of arrow B, a leading edge of the engaging pawl 86 can fit with the surface of the other end 18B of the disk portion 18. Even if the holding portion 30 stops being pulled, then the holding portion 30 cannot be put into the cutaway groove 18F by the urging force of the compression coil spring 44. This allows the worker to release the worker's hand from the holding portion 30. It is convenient for the worker that the worker also can use the worker's both hands to hold the holding portion 30 to turn in the direction of arrow B to release the base plate 16 from the locking body 12.

Ninth Embodiment:

Figs. 17 through 19(A) and 19(B) show a ninth embodiment of the tire slippage preventing apparatus 10 according to the present invention. In this embodiment, even without pulling a holding portion 30 in a disengagement direction, or toward arrow C in Fig. 17, it should be turned in the direction of arrow B in Fig. 17 only to release the base plate 16 from the locking body 12.

Each of the engaging protrusions formed on the holding portion 30, as shown in Fig. 17, has a cutout portion 188 formed at a leading edge thereof. It also has an inclined portion 190 formed adjacent to the cutout portion 188. The inclined portion 190, as shown in Figs. 18(A) and 19(A), can fit with an inside surface of a cutaway groove 18F by turning the holding portion 30. The inclined portion 190 is inclined with respect to the rising direction of the engaging protrusion 186. When the holding portion 30 is turned in the direction of arrow B, the inclined portion 190 of the engaging protrusion 186 can be fitted with the inside surface of the cutaway groove 18F. As a result, an urging force in a disengagement direction (toward arrow C), as shown in Figs. 18(A) and 19(A), is exerted on the holding portion 30. The holding portion 30, therefore, can be moved to separate from a disk portion 18. This results in the flange member (shown in Fig. 7) also being moved so as not to correspond to the engaging groove 55 (shown in Fig. 7). This allows the engaging piece 76 (shown in Fig. 7) of the base plate 16 put in the engaging groove 55 to come out of the engaging groove 55. This can release the base plate 16 from the locking body 12.

The cutout portion 188, as shown in Figs. 18(B) and 19(B), is engaged by an edge of the cutaway groove 18F to prevent the holding portion 30 from turning. In this embodiment, thus, an engaging pawl 86 cannot be put into any other cutaway groove 18F even if no stoppers are formed in position. It should be noted that a maximum movement of the holding portion 30 in the disengagement direction is set in a range so that the cutout portion 188 of the engaging pawl 86 can be engaged with the edge of the cutaway groove 18F.

It is necessary in this embodiment to pull the holding portion 30 in the disengagement direction to release the base plate 16 from the locking body 12. It therefore makes simpler the engagement and disengagement of the locking body 12 and the base plate 16.

Tenth Embodiment:

Figs. 20 through 22(A) and 22(B) show a tenth embodiment of the tire slippage preventing apparatus 10 according to the present invention. The tire slippage preventing apparatus 10 in this embodiment, also, is devised in a way so that the holding portion 30 only needs to be turned to release the base plate 16 from the locking body 12, as in the ninth embodiment.

There are provided engaging protrusions 286. Each of the engaging protrusions 286, as shown in Fig. 20, has a cutout portion 288 formed thereon. The engaging protrusion 286, thus, can be seen like a letter "L" as looked at from an axial direction of the locking body 12. It has an inclined portion 292 formed on an end of one side wall 290 thereof, as in the ninth embodiment.

A cutout portion 288 of the engaging protrusion 286, as shown in Figs. 21(A) and 22(A), is made to correspond to and can fit with respective stoppers 88 to prevent the holding portion 30 from turning beyond that point.

The other configuration of this embodiment is the same as that of the ninth embodiment. In this embodiment, also, a worker should turn the holding portion 30 only to release the base plate 16 from the locking body 12. After this, the engaging protrusion 286, as shown in Figs. 21(B) and 22(B), can be fitted with the stopper 88 to prevent the engaging protrusion 286 from entering the other cutout groove 18F.

Longitudinal cross-sectioned drawings of the locking body 12 and base plate 16 of the tire slippage preventing apparatus 10 in the first to sixth and eighth embodiments are given Figs. 2, 4, 5, 6, 8, 9, 12, 13, and 14. In the drawings, upper halves of the locking body 12 and the base plate 16 are not symmetrical with lower halves thereof. This is because cross-section lines are made different in the upper and lower halves.

The advantages of the tire slippage preventing apparatus according to the present invention, as explained above, consist in particular in the fact that the base plate and the locking body can be firmly fitted together and that they can be released from engagement quickly and easily without a special tool.

## Claims

(1) A tire slippage preventing apparatus comprising:
a first member being fixed to a wheel disk of a wheel;
a second member being attached to said first member;
an arm body supported in position between said first member and said second member, and having an arm a tip of which is fitted to a circumferential surface of a tire;
a groove provided on one of said first member and said second member;
a protrusion provided on the other of said first member and said second member, being put in said groove by said second member being turned around an axis of said wheel to mount said second member to said first member; and,
a preventive means for preventing said protrusion put in said groove from disengaging from said groove.

(2) A tire slippage preventing apparatus according to Claim (1), wherein said preventive means is disposed at an inlet of said groove.

(3) A tire slippage preventing apparatus according to Claim (2), wherein said preventive means is movable between a prevention position where said protrusion is prevented from disengaging from said groove and an accepting position where said protrusion can be put into said groove.

(4) A tire slippage preventing apparatus according to Claim (3), further comprising an urging means for constantly urging said preventive means in a direction of said prevention position.

(5) A tire slippage preventing apparatus according to Claim (4), wherein said inlet of said groove has a recess the depth direction of which is in an axial direction of said wheel.

(6) A tire slippage preventing apparatus according to Claim (5), wherein said second member is constructed to be moved toward said wheel disk so as to move said preventive means from said prevention position to said accepting position by means of said protrusion against the urging force of said urging means, and after this operation, said second member is turned around the axis of said wheel to put said protrusion into said groove and at the same time, said preventive means is movable to said prevention position by the urging force of said urging means, and said protrusion is kept in said groove.

(7) A tire slippage preventing apparatus according to Claim 4, wherein said urging means is comprised of a resilient member.

(8) A tire slippage preventing apparatus according to Claim 5, wherein said resilient member is a coil spring.

(9) A tire slippage preventing apparatus comprising:
a first member mounted to a wheel disk of a wheel;
a second member attached to said first member;
an arm body supported in position between said first member and said second member, having an arm a tip of which is fitted to a surface of a tire contacting a road;
a circular hole provided on one of said first member and said second member, being substantially coaxial with the axis of said wheel;
a shaft portion provided on the other of said first member and said second member, being able to be inserted in the circular hole;
a protrusion provided on the one of said first and second members on which said circular hole is provided, radially protruding from a circumference of said circular hole;
a groove provided on said shaft portion into which said protrusion is put to fit said second member to said first member by turning said second member in one direction around the axis of said wheel while said shaft portion is inserted in said circular hole; and,
a preventive member for preventing said protrusion put in said groove from disengaging from said groove.

(10) A tire slippage preventing apparatus according to Claim (9), wherein said preventive member is movable within a range between a prevention position where said protrusion is prevented from disengaging from said groove and a removal position where said protrusion can disengage from said groove, said preventive member being constantly urged toward said prevention position by an urging means, while being able to be moved from said prevention position to the removal position by insertion of said shaft portion into said circular hole.

(11) A tire slippage preventing apparatus according to Claim (10), wherein said shaft portion has a recess formed at an end thereof to put said protrusion therein, said recess having its depth direction in the axial direction of said wheel.

(12) A tire slippage preventing apparatus according to Claim (11), wherein said preventive member is positioned in said recess and is movable from said prevention position to said removal position by being pushed by said protrusion by insertion of said shaft portion into said circular hole.

(13) A tire slippage preventing apparatus according to Claim (10), wherein said urging means is comprised of a resilient member.

(14) A tire slippage preventing apparatus according to Claim (13), wherein said resilient member is a coil spring.

FIG. I

EP 0 397 067 A1

# FIG. 2

# FIG. 3

FIG. 4

# FIG. 5

# FIG. 6

FIG. 7

FIG. 8

FIG. 9

FIG. 10

FIG. 11

EP 0 397 067 A1

FIG. 12

FIG. 13

FIG. 14

EP 0 397 067 A1

FIG. 15

30   40

C

40A

40D   B

86   44

40D   86   97A   97   46

97A

97B

97A

FIG. 16 A

FIG. 16 B

FIG. 17

FIG. 18A

FIG. 18B

# FIG. 19 A

# FIG. 19 B

# FIG. 20

EP 0 397 067 A1

## FIG. 21A

## FIG. 21B

FIG. 22 A

FIG. 22 B

# FIG. 23
# PRIOR ART

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| Y | US-A-4576214 (PREUSKER) <br> * column 5, lines 21 - 34; figures 3-7 * <br><br> * column 5, lines 60 - 68; claim 1 * | 1-4, 7-10, 13, 14 | B60C27/04 |
| A | | 5, 6, 8, 11, 12 | |
| D | & JP-A-6056609 | | |
| Y | CH-A-584850 (HANS K. SCHIBLI AG ELEKTRISCHE UNTERNEHMUNGEN) <br> * the whole document * | 1-4, 7-10, 13, 14 | |
| A | EP-A-263433 (BRIDGESTONE CORPORATION) <br> * claim 1; figures 2-7, 19, 25, 29 * | 1 | |
| A | IBM TECHNICAL DISCLOSURE BULLETIN. <br> vol. 28, no. 9, February 1986, NEW YORK US <br> pages 4168 - 4169; <br> "LIFT BUTTON RETENTION DEVICE" <br> * the whole document * | 1, 9 | |
| A | US-A-4405006 (PREUSKER) <br> * column 9, line 58 - column 11, line 51; figures 7-9, 12 * | 1 | TECHNICAL FIELDS SEARCHED (Int. Cl.5 ) <br><br> B60C <br> F16B |
| D | & JP-A-57172805 | | |

The present search report has been drawn up for all claims

| Place of search | Date of completion of the search | Examiner |
|---|---|---|
| THE HAGUE | 02 AUGUST 1990 | MYON G.J-P. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

&  : member of the same patent family, corresponding document

EPO FORM 1503 03.82 (P0401)